# EUROPEAN PATENT SPECIFICATION

(11) **EP 4 238 666 B1**
(45) Date of publication and mention of the grant of the patent: **13.08.2025**
(21) Application number: 20960038.6
(22) Date of filing: 11.12.2020
(51) Int. Cl.: B09B 3/00, H05H 1/26, B01D 53/32, B01D 53/26, B01D 53/00, B01D 53/86, B01D 53/30, B01J 19/00, B01J 19/20

(54) **BATCH-TYPE COMPLEX TEMPERATURE TREATMENT MACHINE USING HIGH-TEMPERATURE PLASMA, AND METHOD FOR TREATING EXHAUST GAS THEREOF**
BATCH-BEHANDLUNGSMASCHINE FÜR KOMPLEXE TEMPERATUR MIT HOCHTEMPERATURPLASMA UND VERFAHREN ZUR BEHANDLUNG VON ABGAS DAVON
MACHINE DE TRAITEMENT DE TEMPÉRATURE COMPLEXE DE TYPE PAR LOT UTILISANT UN PLASMA À HAUTE TEMPÉRATURE ET SON PROCÉDÉ DE TRAITEMENT DES GAZ D'ÉCHAPPEMENT

(30) Priority: 30.10.2020 KR 20200143540
(43) Date of publication of application: 06.09.2023
(73) Proprietor: Vitzro Nextech Co., Ltd., Ansan-si, Gyeonggi-do, 15603 (KR)
(72) Inventor: LEE, Byung Ho, Seongnam-si Gyeonggi-do 13554 (KR); HWANG, Lee Ho, Ansan-si Gyeonggi-do 15478 (KR); PARK, Sang Hun, Daejeon 35284 (KR); PARK, Hae Kyoon, Bucheon-si Gyeonggi-do 14671 (KR); LIM, Kyung Wan, Siheung-si Gyeonggi-do 15118 (KR)
(74) Representative: Zimmermann, Tankred Klaus
(86) International application number: PCT/KR2020/018124
(87) International publication number: WO 2022/092422

(56) References cited:
- EP-A1- 2 789 912
- JP-A- H0 584 324
- KR-A- 20110 032 532
- KR-A- 20110 038 220
- KR-A- 20170 053 789
- KR-B1- 100 956 975
- KR-B1- 101 987 334
- US-A1- 2010 179 370

## Description

### [Technical Field]

The present invention relates to a batch-type complex temperature treatment machine using a high-temperature plasma, and a method for treating exhaust gas thereof, and more particularly, to a batch-type complex temperature treatment machine using a high-temperature plasma which is a batch-type treatment machine for organic matter and which is easy to maintain and economical, and a method for treating exhaust gas thereof.

### [Background Art]

The growth of cities and a high residential density result in a significant increase in organic substances of food waste discarded from each household; however, many bulk treatment facilities of organic substance are constructed in the outskirts of residential areas due to the NIMBY phenomenon, and thus the organic substances are gathered in a densely constructed residential district and then transported to the organic substance treatment facilities in the outskirts for treatment. In this case, the odor or an influx of harmful insects produced during storage, transport, and final treatment of the organic substances could be another source of civil complaints, raising the awareness that food waste should be treated at respective production site by respective producer.

US 2010/0179370 A1 relates to a device and method of inerting toxic materials by plasma melting.

KR 2011 0038220 A relates to a hybrid sterilization deodorization device for food garbage treatment.

EP 2 789 912 A1 relates to a plasma melting furnace and to a system and method for waste treatment.

In this respect, a technology that enables organic substances to be treated at a production site has been actively developed.

A technology for treating organic substances developed to be used in a household is a technology that shreds organic substances using a shredder and causes the shredded organic substance to flow together with water into a drain. In the technology, the treatment of the organic substance is simply performed in a household; however, many problems arise in an operation of a sewage treatment plant due to an increase in pollution load of sewage flowing into the sewage treatment plant. Further, an apparatus for destructing organic substances using a technology that performs aerobic degradation of organic substances by using microorganisms has an advantage of using an environment-friendly treatment method; however, problems or the like arise in that complete degradation of organic matters in the organic substances has to take place for a long time, continuous supply of microbe starters which are to be used corresponds to an economical burden, and many point pollution sources increase due to installation of the apparatus for destructing organic substances for each household as a malodorous substance such as hydrogen sulfide or mercaptan is produced while the organic matters is degraded by some anaerobic microorganisms.

On the other hand, in order to solve the above-described problems, there also has been a technology that drains effluent produced by squeezing and dehydrating organic substances to a sewer and dries or carbonizes a remaining solid using an electric heater or a fossil fuel burner; however, the technology has problems of unpleasantness in use in that a plastic bag containing the organic substances has to be opened and then only the organic substances has to be discarded, a long time of treatment by performing drying or carbonization at a temperature of 600°C or below using an electric heater, and a significant degree of odor due to failure of high-temperature pyrolysis of malodorous substances produced during carbonization.

Recently, a method for carbonizing organic substances using a high-temperature plasma has been used, and a method for recycling gas by treating a non-biodegradable organic matter or treating and degrading the organic matter to gas by using the method for carbonizing an organic substance has been used.

A treatment apparatus for carbonizing organic substances is configured of a reactor without oxygen, in general. Regarding a temperature used therein, the low-temperature carbonization is performed at 200 to 400°C, the medium-temperature carbonization is performed at 400 to 600°C, the high-temperature carbonization is generally performed at 600°C or above, and a method for supplying a heat source is classified by a necessary temperature range. The low-temperature carbonization is mainly performed by an indirect heating method using heating medium oil or the like, and the medium-temperature carbonization is mainly performed by a hot air blowing method. In addition, the high-temperature carbonization is performed by an indirect heating method since oxygen is required in case direct flame is to be supplied; however, an apparatus is configured in a manner that uses steam or the like as a heat source for efficiency or that uses a heat source generated during oxidation of a carbon component in a carbonization target.

A method for carbonizing or gasifying organic matters which is a treatment target by using a high-temperature plasma as a heat source uses a method of inducing oxygen to be rare by supplying N₂ rather than a vacuum state in order to induce pyrolysis in an oxygen-free atmosphere.

Further, a generally used method is a method for heating until a temperature of an overall atmosphere in a reactor reaches a desirable temperature by generating flame by attaching a plasma and supplying heat generated therefrom to a reactor.

However, energy is consumed in pre-heating, post-heating, cooling, or the like for a temperature of the atmosphere, and thus a method for using a plasma generally has a problem of high treatment costs.

In addition, there is a case where a plasma torch is provided at a lower part of a reactor in the related art, and thus moisture in organic matter infiltrates into the torch and results in an operation stop of the plasma torch in some cases. Hence, a problem arises in that organic matter inside the reactor has to be all removed or the like in order to perform maintenance of the plasma torch.

### [Citation List]

### [Patent Literature]

### [Patent Literature 1]

Korean Patent Publication No. KR101052855B1 (29-07-2011)

### [Summary of Invention]

### [Technical Problem]

Objects of the present invention to solve the above-described problems are to provide a batch-type complex temperature treatment machine which is a batch-type treatment machine for organic matter and which is easy to maintain and economical, and a method for treating exhaust gas thereof.

Technical objects to be achieved by the present invention are not limited to the technical objects mentioned above, and the following description enables other unmentioned technical objects to be clearly understood by a person of ordinary skill in the art to which the present invention pertains.

### [Solution to Problem]

The configuration of the present invention for achieving the above objectives provides a batch-type complex temperature treatment machine as defined in claim 1 and optionally in the claims 2-4.

The embodiment of the present invention may further include: a first heat exchange unit provided to perform heat exchange between external air and exhaust gas exhausted from the reaction part and condense moisture of the exhaust gas; a scrubber unit provided to be connected to the first heat exchange unit and collect fine particles of the exhaust gas subjected to heat exchange; a mixing unit provided to be connected to the scrubber unit and mix oxygen with the exhaust gas subjected to collection of the fine particles; a heater unit provided to control a temperature of the exhaust gas mixed with oxygen; a purification unit provided to cause a catalytic reaction of the exhaust gas for pollution matter, the exhaust gas having a temperature controlled by the heater unit; a second heat exchange unit provided to be connected to the purification unit and condense moisture of the exhaust gas through heat exchange between the exhaust gas and the external air; and a exhaust unit provided downstream of the second heat exchange unit to discharge the exhaust gas.

According to the embodiment of the present invention, the purification unit may be provided to form a bond between CO in the exhaust gas and O₂, which is additionally supplied by an oxidation catalyst, so as to form CO₂, and to change NO_{X} into N₂ and H₂O by a reduction catalyst with a reducing agent.

The present invention to achieve the above-described object is configured to provide a method as defined in claim 5 for treating exhaust gas of the batch-type complex temperature treatment machine using a high-temperature plasma, the method including: a) a step of discharging exhaust gas from the reaction part; b) a step of performing heat exchange between external air and the discharged exhaust gas and condensing moisture by the first heat exchange unit; c) a step of collecting fine particles of the exhaust gas subjected to condensation of moisture by the scrubber unit; d) a step of mixing external air with the exhaust gas subjected to collection of the fine particles by the mixing unit; e) a step of controlling a temperature of the exhaust gas mixed with oxygen by the heater unit; f) a step of causing a catalytic reaction of the temperature-controlled exhaust gas for pollution matter by the purification unit; g) a step of condensing moisture through heat exchange between the external air and the exhaust gas subjected to the catalytic reaction by the second heat exchange unit; and h) a step of discharging the exhaust gas subjected to condensation of moisture by the exhaust unit.

According to another embodiment of the present invention, in the step f), the purification unit may be provided to determine a carbonization complete state of having a moisture content of smaller than 1% in the reactor when a downstream temperature of an oxidation catalyst for a CO treatment is equal to or above a preset temperature, and to stop operation of the torch part.

### [Advantageous Effects of Invention]

The present invention according to the above-described configurations is economically effective in that a carbonization degree of organic matter is derived from a downstream temperature of an oxidation catalyst for treatment of carbon monoxide and a service end time of a plasma torch part can be determined without an additional gas measuring system.

In addition, the plasma torch part is provided at an upper part of a reactor, and thus a problem of moisture infiltrating into the torch part does not arise. Thus, there is no need to remove content in the reactor, making maintenance of the torch part easy.

In addition, since the torch part is positioned at an upper right part and discharges plasma, various temperature regions can be formed in the reactor and enables carbonization to be performed depending on complex temperatures of a high temperature, a medium temperature, and a low temperature.

In addition, although the reactor is made of stainless steel, a temperature in the reactor is below 150°C, so no harmful substances are produced by the plasma.

In addition, according to the present invention, an internal temperature of the reactor can be maintained mostly at the lowest temperature (100°C due to necessity of vaporization) by using a plasma having various temperatures from partially high temperature (1,500°C or above) to a low temperature. Consequently, minimum gasification for carbonization is induced, and thereby safety of equipment is improved with low overall treatment temperature and pressure and the gasification for carbonization can be minimized to an extent as much as necessary such that an economical operation can be performed.

The effects of the present invention are construed not to be limited to the above-described effects but to include every effect that can be derived from the configurations of the present invention described in detailed description or claims of the present invention.

### [Brief Description of Drawings]

FIG. 1 is a diagram illustrating a configuration of a batch-type complex temperature treatment machine using a high-temperature plasma according to an embodiment of the present invention.
FIG. 2 is a diagram illustrating a case in which a reactor of the batch-type complex temperature treatment machine using a high-temperature plasma is according to the embodiment of the present invention is U-shaped.
FIG. 3 is a diagram illustrating a temperature for each location of the batch-type complex temperature treatment machine using a high-temperature plasma according to the embodiment of the present invention.
FIG. 4 illustrates analysis tables of harmful components contained in carbonization by-products produced by a high-temperature carbonization method in the related art and a carbonization method using the batch-type complex temperature treatment machine using a high-temperature plasma according to the embodiment of the present invention, respectively.
FIG. 5 illustrates tables of amounts of heavy metals produced in the reactor according to the embodiment of the present invention.
FIG. 6 is a flowchart of a method for treating exhaust gas of the batch-type complex temperature treatment machine using a high-temperature plasma according to another embodiment of the present invention.
FIG. 7 is a graph illustrating a change in temperature of an oxidation catalyst depending on a production amount of carbon monoxide according to the embodiment of the present invention.

### [Description of Embodiments]

The preferred embodiment of the present invention, which is defined in claim 1, includes: a reaction part provided to accommodate therein organic matter for carbonization; a rotation part provided to agitate the inside of the reaction part; and a torch part provided to generate plasma so as to carbonize the organic matter inside the reaction part, wherein the torch part is coupled to the reaction part and is provided to be coupled to an opposite side to the position where the organic matter is accumulated and agitated inside the reaction part.

### [Embodiments]

Hereinafter, the present invention will be described with reference to the accompanying drawings. However, the present invention can be realized into various different examples, thus not being limited to the embodiments described here, but only by the claims.

Further, a part unrelated to the description is omitted from the drawings in order to clearly illustrate the present invention, and similar reference signs are assigned to similar parts through the entire specification.

In the entire specification, a case where a certain part is "connected to (attached to, in contact with, or coupled to)" another part means not only a case where the parts are "directly connected" to each other, but also a case where the parts are "indirectly connected" to each other with an additional member interposed therebetween. In addition, when a certain part "comprises" a certain configurational element, this does not mean that another configurational element is excluded, but means that the configurational element can be further included unless specifically described otherwise.

Terms used in this specification are used to describe only a specific embodiment and are not intentionally used to limit the present invention thereto. A word having a singular form represents both singular and plural forms of the word unless obviously implied otherwise in context. In this specification, a term such as "to comprise" or "to include" is to be construed to specify presence of a feature, a number, a step, an operation, a configurational element, a component, or a combination thereof described in the specification and not to exclude presence or a possibility of addition of one or more other features, numbers, steps, operations, configurational elements, components, or combinations thereof in advance.

Hereinafter, embodiments of the present invention will be described in detail with reference to the accompanying drawings.

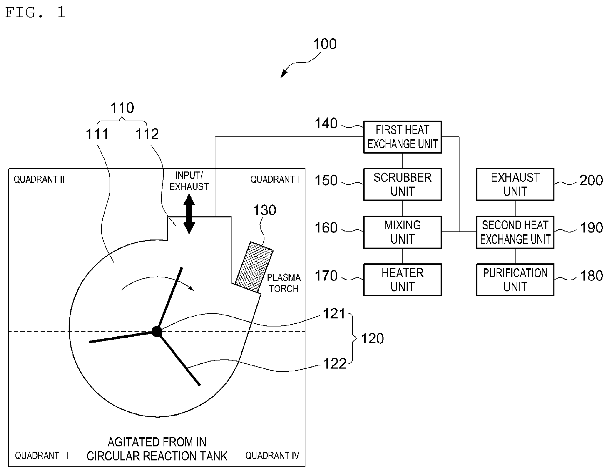

FIG. 1 is a diagram illustrating a configuration of a batch-type complex temperature treatment machine using a high-temperature plasma according to an embodiment of the present invention.

With reference to FIG. 1, a batch-type complex temperature treatment machine 100 using a high-temperature plasma includes a reaction part 110, a rotation part 120, a torch part 130, a first heat exchange unit 140, a scrubber unit 150, a mixing unit 160, a heater unit 170, a purification unit 180, a second heat exchange unit 190, and an exhaust unit 200.

The reaction part 110 is provided to accommodate therein organic matter for carbonization, and includes a reactor 111 and a reaction opening 112.

As defined in claim 1 reactor 111 can be formed into a circular shape and can be provided to allow organic matter to be accumulated from a bottom part thereof. Further, the reactor 111 is made of stainless steel so as to inhibit rust or corrosion when the organic matter is carbonized.

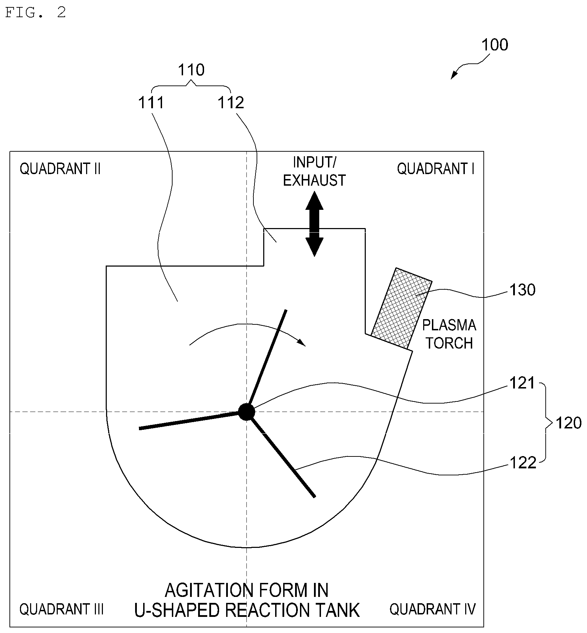

FIG. 2 is a diagram illustrating a case in which a reactor of the batch-type complex temperature treatment machine using a high-temperature plasma is according to the embodiment of the present invention is U-shaped.

In addition as defined in claim 1, as illustrated in FIG. 2, the shape of the reactor 111 is not limited to a circular shape but can be a U shape.

The reaction opening 112 is provided on one side of an upper part of the reactor 111 so as to form a passage through which the organic matter can be put in the reactor.

In addition, the reaction opening 112 can discharge exhaust gas produced during carbonization of the organic matter.

In particular, as defined in claim 1 and illustrated in FIG. 1, when regions of the reactor 111 are defined as quadrant I, quadrant II, quadrant III, and quadrant IV in a counterclockwise direction from an upper right side with a horizontal axis and a vertical axis as references at a center of the reactor 111, the reaction opening 112 is formed at one of quadrant I and quadrant II.

More desirably, the reaction opening 112 can be formed at quadrant I as illustrated in the drawing.

The rotation part 120 is provided to agitate the inside of the reaction part 110 and includes a rotating shaft 121 and rotors 122.

The rotating shaft 121 is provided at a center of the reaction part 110 so as to be rotatable.

The rotors 122 are can be coupled to the rotating shaft 121, and can be provided in plurality.

The rotating shaft 121 provided as described above is provided to rotate in the same direction as a direction in which organic matter is put in through the reaction opening 112.

Specifically, when the reaction opening 112 is provided at quadrant I as illustrated in the drawing, the organic matter input through the reaction opening 112 is moved from quadrant I toward quadrant 4. Consequently, the rotating shaft 121 can be provided to rotate in a clockwise direction such that the rotors 122 are moved from quadrant I toward quadrant IV.

The torch part unit 130 is provided to generate plasma so as to carbonize the organic matter inside the reaction part 110, and the torch part 130 can be coupled to the reaction part 110 and is provided to be coupled to an opposite side to the position where the organic matter is accumulated and agitated inside the reaction part 110.

Specifically, the torch part 130 is provided to be coupled to an upper part of the reactor 111, and desirably can be provided to be positioned at a region of quadrant I on an upper right side of the reactor 111.

When the torch part 130 is positioned at a region of quadrant III and quadrant IV as a lower part of the reactor 111, the organic matter or treatment target matter put in the reactor 111 can interfere with the torch part. In particular, there is a high possibility that, in a case of organic matter containing a large amount of moisture, such as food, the plasma torch part 130 malfunctions due to infiltration of moisture into the torch part. Consequently, a phenomenon of water or moisture filling the plasma torch part 130 has to be inhibited by continuously supplying an inert gas for plasma operation from when organic matter is input to when organic matter treatment is completed.

However, when the torch part 130 is positioned at an upper part of the reactor 111 as in the present invention, a problem of interference of the moisture and treatment target matter with the torch part 130 can be inhibited.

In addition, the torch part 130 is provided to have a firing direction of flame to be the same as a direction in which the organic matter is input and a rotation direction of the rotation part 120 so as not for the rotation part 120 to block an outlet of the torch part 130.

When the rotation part 120 blocks the outlet of the torch part 130, it is not only affected by moisture but also in reactivity. The organic matter is induced to be carbonized; however, the organic matter can be gasified by being left at a high temperature for a long time. This leads to a reaction which does not correspond to the object to be achieved.

In addition, when the plasma torch is positioned at a lower part, maintenance of the plasma torch is difficult if the content in the reactor 111 is not removed during maintenance thereof. However, the torch part 130 positioned at an upper part forms a structure in which attachment and detachment and maintenance thereof can be performed without removing the content in the reactor 111.

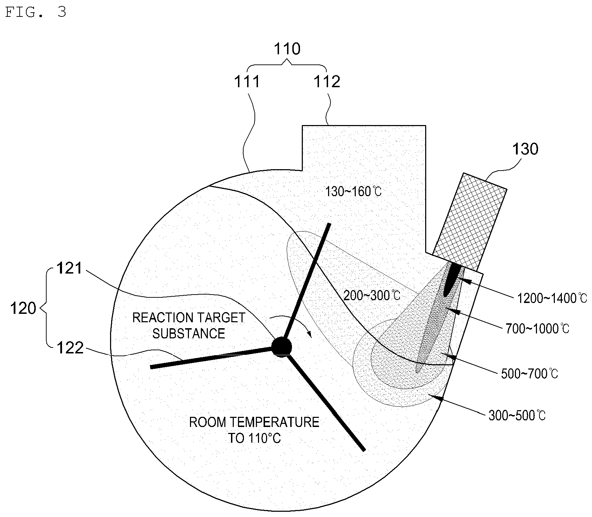

FIG. 3 is a diagram illustrating a temperature for each location of the batch-type complex temperature treatment machine using a high-temperature plasma according to the embodiment of the present invention.

With reference to FIG. 3, a low-temperature, medium-temperature, or high-temperature carbonization method is generally used as a method for carbonizing organic matter.

A plasma flame has a temperature of about 1,400°C or above at a central portion, and the temperature is rapidly lowered as the plasma flame is released into the atmosphere. In this case, dry-carbonization-gasification steps can be induced depending on how long a reaction target object is maintained in a temperature range. In addition, the low-temperature carbonization results in an increase in calorific value due to remaining organic matter in addition to carbon and thus can be advantageous in that the remaining organic matter can be used as nutriment for plants when used in soil, and can be used as slow-release nutriment.

In the case of the low-temperature carbonization, a large amount of cellulose and lignin is present, and pH of about 6 to 7 is maintained. However, the high-temperature carbonization leaves mostly carbon components only, increasing substances to be oxidized so as to increase the number of batches and increasing pH to 9 or higher so as to result in an adverse effect when a large amount is used, and thus nutrients, the calorific value, or the like decreases to a certain extent.

The medium-temperature carbonization is performed at a temperature of about 400°C. In this case, harmful dioxins can be produced, and carbonization by-products can be produced by an oil component such as tar.

When the torch part 130 configured of a DC high-temperature plasma generating apparatus discharges a plasma from quadrant I of the reactor 111 as illustrated in FIG. 3, various temperature regions are formed in the reactor 111. In this case, the carbonization proceeds similar to carbonization after drying which is a general carbonization process; however, some low-temperature carbonization is performed even in a drying period in this apparatus, and a high-temperature carbide is rapidly formed when a moisture content reaches 5% or smaller.

Specifically, even though some locations have a temperature for the medium-temperature carbonization, the locations correspond to some surface of a carbonization target object, and the remaining organic matter decreases in temperature to a low temperature due to heat transmission through agitation and a large amount of moisture. Further, as moisture is vaporized, heat of vaporization is taken from the organic matter such that the temperature of the organic matter does not rapidly increase. In this case, a phenomenon of the low-temperature carbonization occurs at a surface at which the medium-temperature carbonization can occur. When agitation is not performed or moisture is not present, a large amount gasification is to be performed as very rapid high-temperature carbonization occurs. The present invention ensures economic efficiency of consumed energy by minimizing the amount of gasification only as much as necessary for carbonization and can perform the carbonization by adjusting an agitation speed of the rotation part 120 so as to minimize the amount of gasification.

As described above, the machine is characterized by feasibility of all of desired low-temperature, medium-temperature, high-temperature carbonizations by using the rotation part 120 and the torch part 130.

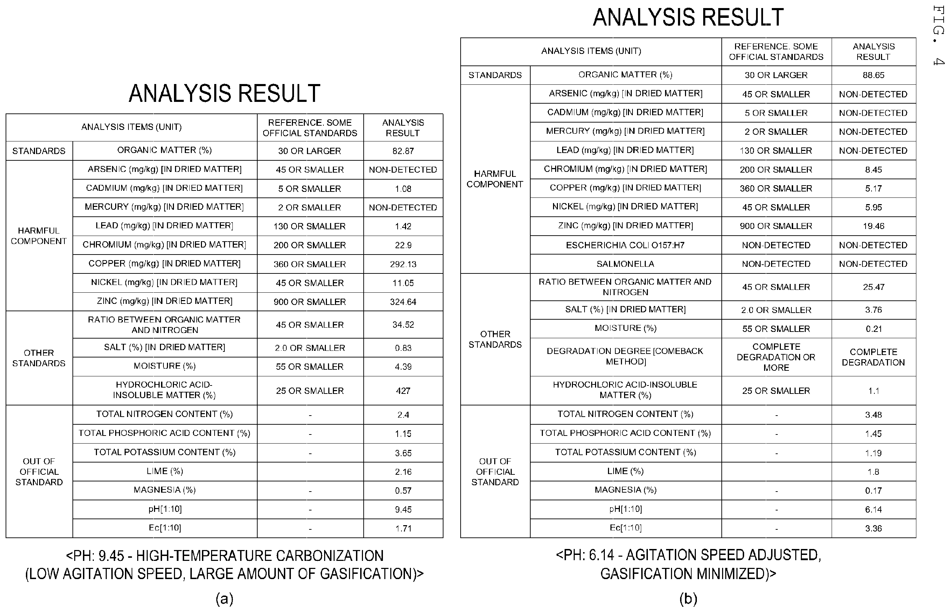

FIG. 4 illustrates analysis tables of harmful components contained in carbonization by-products produced by a high-temperature carbonization method in the related art and a carbonization method using the batch-type complex temperature treatment machine using a high-temperature plasma according to the embodiment of the present invention, respectively.
(a) of FIG. 4 shows results of content analysis of harmful components after the gasification is significantly performed by slowing the agitation speed so as to perform the high-temperature carbonization.
(b) of FIG. 4 shows results of content analysis of harmful components, after the low-temperature carbonization, in which the agitation speed is adjusted and gasification is minimized, is performed.

With reference to FIG. 4, dried matter of the organic matter or carbides generally have a calorific value of about 3,500 to 4,000 kcal/kg. Hence, general dried matter contains about 10% of moisture to lower the calorific value. In addition, since a component that can generate heat is gasified and removed depending on a carbonization degree, the calorific value is affected to be lowered. In order to induce a calorific value characteristic of 4,500 kcal/kg or higher, which is a calorific value of the general low-temperature carbides, the carbonization has to be performed at a low temperature. However, In this case, the percentage of moisture content is difficult to induce to a very low percentage of 1% or lower, and the low-temperature carbonization alone does not remove an odor component or the like present in a carbonization target substance. Hence, carbides having some shortcomings when used in soil are produced.

Carbides of organic matter such as foods, pear, or citron have a calorific value of 5,000 kcal/kg or higher by using the complex temperature treatment machine. However, when waste fruits or food waste is treated in accordance with the present invention as illustrated in FIG. 4, the carbides do not have a brown color of the low-temperature carbides but have a black carbide shape of the high-temperature carbides. In other words, the carbides having properties of the low-temperature carbides having a high calorific value are produced when carbonization is performed by complex reactions (at a high temperature and at a low temperature).

As described above, the present invention can have an effect of degrading a harmful component, odor gas, or the like which is an advantage of the high-temperature carbonization while maintaining of the calorific value, the nutrient, or the like of the carbides, which is an advantage of the low-temperature carbonization, is achieved.

The torch part 130 is coupled to the reactor 111 to have a position and an angle so that plasma can be emitted in a direction corresponding to a direction of organic matter which is put in through the reaction opening 112.

More specifically, the torch part 130 can be coupled in a perpendicular direction to a tangential direction of an inner wall of the reactor 111 and is provided to have an emission direction at an angle of 0° or larger inward from a tangential direction of an outer wall of the reactor 111.

Specifically, a general carbonization reactor made of a general steel material is rusted and corroded due to a large amount of moisture. Hence, as described above, the reactor 111 of the present invention is made of a stainless steel material so as to inhibit rust or corrosion.

However, in a case of using the high-temperature plasma having an ultra high temperature, a harmful component such as nickel or chromium can be emitted from the stainless steel material in a high-temperature region.

The present invention can be provided to reduce emission of a harmful substance which can be produced through pyrolysis of the material of the reactor 111 with the organic matter put inside the reactor, the agitation speed, or a shape of the reactor 111.

More specifically, a temperature inside the reactor varies depending on the agitation speed or a position of the plasma torch part 130. In addition, an internal temperature varies depending on presence or absence of organic matter therein.

Consequently, the torch part 130 can be coupled in the perpendicular direction to the tangential direction of the inner wall of the reactor 111 and is provided to have the emission direction at an angle of 0° or larger inward from the tangential direction of the outer wall of the reactor 111, and thereby the torch part 130 has a structure in which the organic matter absorbs ultra-high-temperature heat generated from the plasma torch by rotation of the internal rotation part 120 in the reactor 111 such that the outer wall of the reactor 111 is not affected.

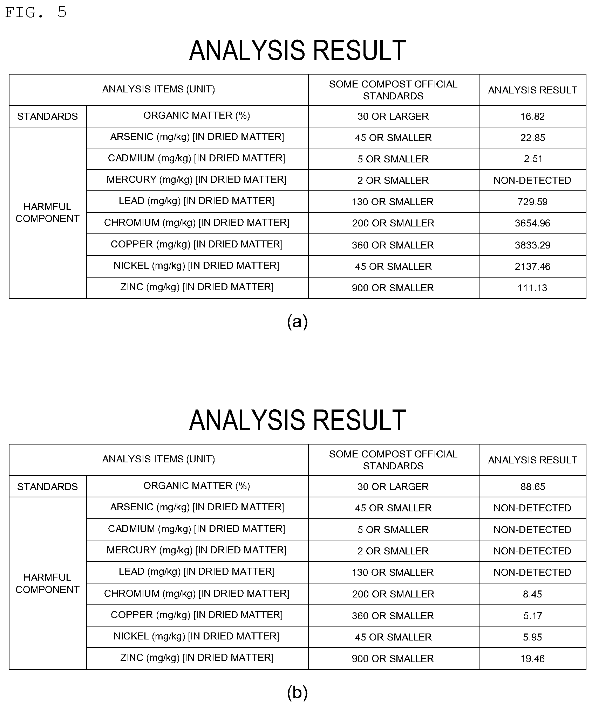

FIG. 5 illustrates tables of amounts of heavy metals produced in the reactor according to the embodiment of the present invention.

With reference to FIG. 5, in a case of disposition as described above, the amount of a heavy metal component such as chromium which is separated from the inside of the reactor 111 made of stainless steel can be minimized.

In addition, regarding a direction of the rotation part 120, when the rotation part 120 rotates toward the plasma torch part 130, a reaction target substance blocks a plasma flame in front of the plasma torch, and the plasma flame is bent toward the outer wall of the reactor 111. In this case, a harmful heavy metal is separated from the stainless steel instantaneously due to a high temperature of 1,200°C or above and is mixed with the reaction target substance to produce harmful substances. In addition, a durable degree of the reactor is lowered, and durability is lowered.

However, in the present invention, in order to manufacture the reactor 111 made of the stainless steel material, the plasma torch part 130 is positioned at an upper part of the reactor 111 and is attached in the perpendicular direction to the tangential direction of the inner wall of the reactor 111. In addition, since the plasma torch part 130 is provided at the angle of 0° or larger inward from the tangential direction of the outer wall, and the direction of the rotation part 120 is maintained in the same direction as the direction of the plasma flame, the amount of a heavy metal component separated inside the reactor 111 can be minimized.

The first heat exchange unit 140 can be provided to perform heat exchange between external air and exhaust gas discharged from the reaction part 110 and condense moisture of the exhaust gas.

In the beginning of the gas treatment during carbonization, moisture to be vaporized, fine carbonized powder, and the like is mostly produced and is emitted by being gasified into a form of CO and nitrogen oxide such as NO_{X} when the amount of moisture is minimized to about 5% or smaller.

The first heat exchange unit 140 can be provided to allow external air to directly flow therein or can be provided to be connected to the second heat exchange unit 190 so as to allow external air subjected to heat exchange once to flow therein. As described above, the first heat exchange unit 140 can be provided to condense moisture in the exhaust gas by using the flowing-in external air as cooling energy.

The scrubber unit 150 can be provided to be connected to the first heat exchange unit 140 and collect fine particles of the exhaust gas subjected to the heat exchange.

The scrubber unit 150 can be configured of a water spray scrubber and can be provided to collect fine particles and remove condensed moisture.

The exhaust gas passing through the first heat exchange unit 140 and the scrubber unit 150 as described above remains only as synthesis gas such as H₂, CO, or NO_{X}.

The mixing unit 160 can be provided to be connected to the scrubber unit 150 and mix oxygen with the exhaust gas subjected to collection of the fine particles.

Specifically, the exhaust gas produced in the anaerobic reaction part 110 very much lacks an oxygen component. Consequently, since oxygen is additionally required during a catalytic reaction with an oxidation catalyst in the purification unit 180, the mixing unit 160 can be provided to receive external air from the second heat exchange unit 190 and mix the external air with the exhaust gas.

The heater unit 170 can be provided to control a temperature of the exhaust gas mixed with oxygen.

The catalytic reaction in the purification unit 180 requires an appropriate temperature to be activated. Consequently, the heater unit 170 can be configured of an indirect contact heater to perform control such that the exhaust gas flowing to the purification unit 180 is not oxidized but has a temperature suitable for the catalytic reaction.

The purification unit 180 can be provided to cause the catalytic reaction of the exhaust gas for pollution matter, the exhaust gas having a temperature controlled by the heater unit 170.

Specifically, the purification unit 180 can be provided to form a bond between CO in the exhaust gas and O₂, which is additionally supplied by an oxidation catalyst, so as to form CO₂, and to change NO_{X} into N₂ and H₂O by the reduction catalyst with a reducing agent.

As described above, the purification unit 180 can be provided to change the pollution matter into unharmful gas through the catalytic reaction.

The second heat exchange unit 190 can be provided to be connected to the purification unit 180 and condense moisture of the exhaust gas through the heat exchange between the exhaust gas and the external air. Further, the external air increased in temperature can be supplied upstream of the heater unit 170 so as to help energy consumption of a heater.

The exhaust unit 200 can be provided downstream of the second heat exchange unit 190 and discharge the exhaust gas consisting of unharmful gas.

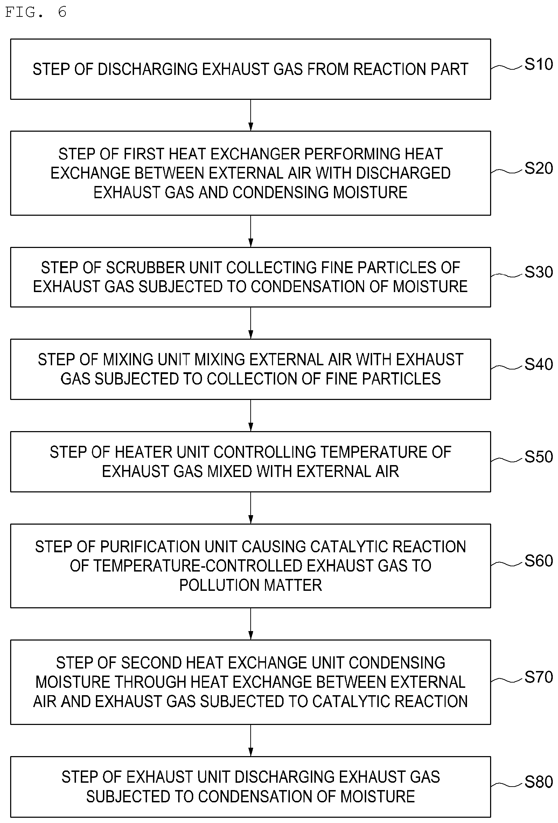

FIG. 6 is a flowchart of a method for treating exhaust gas of the batch-type complex temperature treatment machine using a high-temperature plasma according to another embodiment of the present invention.

With reference to FIG. 6, in the method for treating exhaust gas of the batch-type complex temperature treatment machine using a high-temperature plasma, Step S10 of discharging the exhaust gas from the reaction part can be first performed.

In Step S10 of discharging the exhaust gas from the reaction part, the exhaust gas produced from the carbonization in the reaction part 110 can be discharged toward the first heat exchange unit 140.

After Step S10 of discharging the exhaust gas from the reaction part, Step S20 of performing heat exchange between external air and the discharged exhaust gas and condensing moisture can be performed by the first heat exchange unit.

In Step S20 of performing heat exchange between external air and the discharged exhaust gas and condensing moisture by the first heat exchange unit, the first heat exchange unit 140 can be provided to perform the heat exchange between the discharged exhaust gas and the external air so as to condense and remove the moisture.

After Step S20 of the first heat exchange unit performing heat exchange between external air and the discharged exhaust gas and condensing moisture, Step S30 of collecting fine particles of the exhaust gas subjected to condensation of moisture can be performed by the scrubber unit.

In Step S30 of the scrubber unit collecting fine particles of the exhaust gas subjected to condensation of moisture, the scrubber unit 150 can be configured of a water spray scrubber and can remove fine particles and moisture in the exhaust gas.

After Step S30 of the scrubber unit collecting fine particles of the exhaust gas subjected to condensation of moisture, Step S40 of mixing the external air with the exhaust gas subjected to collection of fine particles can be performed by the mixing unit.

In Step S40 of the mixing unit mixing the external air with the exhaust gas subjected to collection of fine particles, the mixing unit 160 can be provided to be connected to the scrubber unit 150 and mix oxygen with the exhaust gas subjected to the collection of fine particles.

After Step S40 of the mixing unit mixing the external air with the exhaust gas subjected to collection of fine particles, Step S50 of controlling a temperature of the exhaust gas mixed with the external air can be performed by the heater unit.

In Step S50 of the heater unit controlling a temperature of the exhaust gas mixed with the external air, the heater unit 170 can perform control such that the exhaust gas flowing to the purification unit 180 is not oxidized but has a temperature suitable for the catalytic reaction.

After Step S50 of the heater unit controlling a temperature of the exhaust gas mixed with the external air, Step S60 of causing a catalytic reaction of the temperature-controlled exhaust gas for pollution matter can be performed by the purification unit.

In Step S60 of the purification unit causing a catalytic reaction of the temperature-controlled exhaust gas for pollution matter, the purification unit 180 can be provided to cause the catalytic reaction of the exhaust gas for pollution matter, the exhaust gas having a temperature controlled by the heater unit 170.

Specifically, the purification unit 180 can be provided to form a bond between CO in the exhaust gas and O₂, which is additionally supplied by an oxidation catalyst, so as to form CO₂, and to change NO_{X} into N₂ and H₂O by the reduction catalyst with a reducing agent.

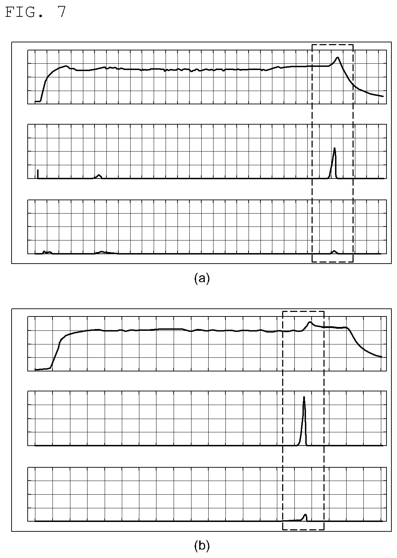

FIG. 7 is a graph illustrating a change in temperature of an oxidation catalyst depending on a production amount of carbon monoxide according to the embodiment of the present invention.

Meanwhile, with reference to FIG. 7, in Step S60 of the purification unit causing a catalytic reaction of the temperature-controlled exhaust gas for pollution matter, the purification unit 180 can be provided to determine a carbonization complete state of having a moisture content of smaller than 1% in the reactor when a downstream temperature of an oxidation catalyst for a CO treatment is equal to or above a preset temperature, and to stop operation of the torch part 130.

Specifically, in the operation of the batch-type complex temperature treatment machine using a high-temperature plasma, a configuration of a service end time (carbonization complete step) is important. More treatment than needed results in excessive energy consumption and requires more capacity than needed of a configuration of exhaust gas treating equipment.

In addition, untreated matter causes insufficient carbonization, degrades quality of by-products to be used later, and results in malfunction of a discharge system.

When the moisture content of organic matter put in the reaction part 110 becomes about 1% or smaller, supplied energy is not mainly used for moisture vaporization but is used to gasify the organic matter. In this case, CO is synthesized and produced. Further, a CO treatment catalyst causes an oxidation reaction, and heat is generated. Consequently, without an additional gas measuring sensor, the amount of gas production can be calculated using a downstream temperature of a CO catalyst, and heat generated at equal to or more than a certain level based on the calculated amount of gas is recognized as a state of having a moisture content of 1% or smaller content or a carbonization complete state. In this case, the operation of the torch part 130 and the operation of the batch-type complex temperature treatment machine 100 using a high-temperature plasma can be ended.

After Step S60 of the purification unit causing a catalytic reaction of the temperature-controlled exhaust gas for pollution matter, Step S70 of performing heat exchange between external air and exhaust gas subjected to a catalytic reaction and condensing moisture can be performed by the second heat exchange unit.

In Step S70 of the second heat exchange unit performing heat exchange between external air and exhaust gas subjected to a catalytic reaction and condensing moisture, the second heat exchange unit 190 can be provided to be connected to the purification unit 180 and condense moisture of the exhaust gas through the heat exchange between the exhaust gas and the external air. Further, the external air increased in temperature can be supplied upstream of the heater unit 170 so as to help energy consumption of a heater.

After Step S70 of the second heat exchange unit performing heat exchange between external air and exhaust gas subjected to a catalytic reaction and condensing moisture, Step S80 of discharging the exhaust gas subjected to condensation of moisture can be performed by the exhaust unit.

In Step S80 of the exhaust unit discharging the exhaust gas subjected to condensation of moisture, the exhaust unit 200 can be provided to discharge the exhaust gas consisting of unharmful gas.

In the present invention, the batch-type complex temperature treatment machine can be a carbonizing machine.

### [Reference Signs List]

100: Batch-type complex temperature treatment machine using a high-temperature plasma
110: Reaction part
111: Reactor
112: Reaction opening
120: Rotation part
121: Rotating shaft
122: Rotor
130: Torch part
140: First heat exchange unit
150: Scrubber unit
160: Mixing unit
170: Heater unit
180: Purification unit
190: Second heat exchange unit
200: Exhaust unit

## Claims

1. A batch-type complex temperature treatment machine using a high-temperature plasma (100), comprising:
a reaction part (110) provided to accommodate therein organic matter for carbonization having a circular or U-shaped reactor (111) to allow organic matter to be accumulated from a bottom part and a reaction opening (112) provided on one side of an upper part of the reactor to form a passage through which the organic matter can be put in the reactor (111);
a rotation part (120) provided to agitate the inside of the reaction part (110) wherein the rotation part (120) includes a rotating shaft (121), that is formed at a center of the reaction part (110), and a plurality of rotors (122) coupled to the rotating shaft (121), wherein the rotating shaft is provided to rotate in the same direction as a direction in which organic matter is put in through the reaction opening (112); and
a torch part (130) provided to generate the plasma flame so as to carbonize the organic matter inside the reaction part (110),
wherein the torch part (130) is coupled to the reaction part (110), and is provided to be coupled to an opposite side to the position where the organic matter is accumulated and agitated inside the reaction part (110), and
wherein the reactor (111) is made by stainless steel,
and wherein regions of of the reactor (111) is defined as first quadrant, second quadrant, third quadrant, and fourth quadrant in a counterclockwise direction from the upper right side of the reactor (111) based on the horizontal and vertical axes from the center of the reactor (111), the reaction opening (112) and the torch part (130) are located in the first quadrant region, so that since the torch part is positioned at an upper right part and discharges plasma, various temperature regions can be formed in the reactor and enables carbonization to be performed depending on complex temperatures of a high temperature, a medium temperature, and a low temperature,
wherein the torch part (130) is coupled in a perpendicular direction to a tangential direction of the inner wall of the reactor (111),
wherein the torch part (130) is provided to have an emission direction at an angle of 0° or larger inward from a tangential direction of the outer wall of the reactor (111), wherein the torch part (130) has a structure in which the organic matter absorbs ultra-high-temperature heat generated from the plasma torch by rotation of the internal rotation part (120) in the reactor (111) such that the outer wall of the reactor 111 is not affected and with the provision that the direction of the rotation part (120) is maintained in the same direction as the direction of the plasma flame,the amount of a heavy metal component such as chromium which is separated from the inside of the reactor 111 made of stainless steel can be minimized.

2. The batch-type complex temperature treatment machine using a high-temperature plasma (100) according to claim 1, further comprising:
a first heat exchange unit (140) provided to perform heat exchange between external air and exhaust gas discharged from the reaction part (110) and condense moisture of the exhaust gas;
a scrubber unit (150) provided to be connected to the first heat exchange unit (140) and collect fine particles of the exhaust gas subjected to heat exchange;
a mixing unit (160) provided to be connected to the scrubber unit (150) and mix oxygen with the exhaust gas subjected to collection of the fine particles;
a heater unit (170) provided to control a temperature of the exhaust gas mixed with oxygen;
a purification unit (180) provided to cause a catalytic reaction of the exhaust gas for pollution matter, the exhaust gas having a temperature controlled by the heater unit (170);
a second heat exchange unit (190) provided to be connected to the purification unit (180) and condense moisture of the exhaust gas through heat exchange between the exhaust gas and the external air; and
an exhaust unit (200) provided downstream of the second heat exchange unit (190) to discharge the exhaust gas.

3. The batch-type complex temperature treatment machine using a high-temperature plasma (100) according to claim 2,
wherein the purification unit (180) is provided to make a bond between CO in the exhaust gas and O₂, which is additionally supplied by an oxidation catalyst, so as to form CO₂, and to change NO_{X} into N₂ and H₂O by a reduction catalyst with a reducing agent.

4. The batch-type complex temperature treatment machine using a high-temperature plasma (100) according to claim 3,
wherein the purification unit (180) is provided to determine a carbonization complete state of having a moisture content of smaller than 1% in the reactor (111) when a downstream temperature of an oxidation catalyst for a CO treatment is equal to or above a preset temperature, and to stop operation of the torch part (130).

5. A method for treating exhaust gas of the batch-type complex temperature treatment machine using a high-temperature plasma (100) according to claim 2, the method comprising:
a) a step of discharging exhaust gas from the reaction part (110);
b) a step of performing heat exchange between external air and the discharged exhaust gas and condensing moisture by the first heat exchange unit (140);
c) a step of collecting fine particles of the exhaust gas subjected to condensation of moisture by the scrubber unit (150);
d) a step of mixing external air with the exhaust gas subjected to collection of the fine particles by the mixing unit (160);
e) a step of controlling a temperature of the exhaust gas mixed with oxygen by the heater unit (170);
f) a step of causing a catalytic reaction of the temperature-controlled exhaust gas to pollution matter by the purification unit (180);
g) a step of condensing moisture through heat exchange between the external air and the exhaust gas subjected to the catalytic reaction by the second heat exchange unit (190); and
h) a step of discharging the exhaust gas subjected to condensation of moisture by the discharge unit.

6. The method for treating exhaust gas of the batch-type complex temperature treatment machine using a high-temperature plasma (100) according to claim 5,
wherein, in the step of f),
the purification unit (180) is provided to determine a carbonization complete state of having a moisture content of smaller than 1% in the reactor (111) when a downstream temperature of an oxidation catalyst for a CO treatment is equal to or above a preset temperature, and to stop operation of the torch part (130).

## Patentansprüche

1. Chargen-Typ-Komplextemperaturbehandlungsmaschine, die ein Hochtemperaturplasma (100) verwendet, die folgende Merkmale aufweist:
ein Reaktionsteil (110), das vorgesehen ist, um darin organische Substanz zur Karbonisierung aufzunehmen, mit einem kreisförmigen oder U-förmigen Reaktor (111), um zu ermöglichen, dass organische Substanz von einem Bodenteil angesammelt wird, und einer Reaktionsöffnung (112), die auf einer Seite eines oberen Teils des Reaktors vorgesehen ist, um einen Durchgang zu bilden, durch den die organische Substanz in den Reaktor (111) eingebracht werden kann;
ein Drehteil (120), das vorgesehen ist, um das Innere des Reaktionsteils (110) aufzurühren, wobei das Drehteil (120) eine Drehwelle (121), die in einer Mitte des Reaktionsteils (110) ausgebildet ist, und eine Mehrzahl von Rotoren (122), die mit der Drehwelle (121) gekoppelt sind, aufweist, wobei die Drehwelle vorgesehen ist, um sich in der gleichen Richtung wie eine Richtung zu drehen, in der organische Substanz durch die Reaktionsöffnung (112) eingebracht wird; und
ein Brennerteil (130), das vorgesehen ist, um die Plasmaflamme zu erzeugen, um die organische Substanz innerhalb des Reaktionsteils (110) zu karbonisieren,
wobei das Brennerteil (130) mit dem Reaktionsteil (110) gekoppelt ist und vorgesehen ist, um mit einer gegenüberliegenden Seite zu der Position gekoppelt zu sein, an der die organische Substanz innerhalb des Reaktionsteils (110) angesammelt und aufgerührt wird, und
wobei der Reaktor (111) aus rostfreiem Stahl hergestellt ist,
und wobei Bereiche des Reaktors (111) als ein erster Quadrant, ein zweiter Quadrant, ein dritter Quadrant und ein vierter Quadrant in einer Richtung gegen den Uhrzeigersinn von der oberen rechten Seite des Reaktors (111) basierend auf der horizontalen und vertikalen Achse von der Mitte des Reaktors (111) definiert sind, wobei die Reaktionsöffnung (112) und das Brennerteil (130) in dem ersten Quadrantenbereich angeordnet sind, so dass, da das Brennerteil an einem oberen rechten Teil positioniert ist und Plasma abgibt, verschiedene Temperaturbereiche in dem Reaktor gebildet werden können und ermöglicht wird, dass die Karbonisierung in Abhängigkeit von komplexen Temperaturen einer hohen Temperatur, einer mittleren Temperatur und einer niedrigen Temperatur durchgeführt wird,
wobei das Brennerteil (130) in einer senkrechten Richtung zu einer tangentialen Richtung der Innenwand des Reaktors (111) gekoppelt ist,
wobei das Brennerteil (130) vorgesehen ist, um eine Emissionsrichtung in einem Winkel von 0° oder größer nach innen von einer tangentialen Richtung der Außenwand des Reaktors (111) aufzuweisen, wobei das Brennerteil (130) eine Struktur aufweist, bei der die organische Substanz Ultrahochtemperaturwärme absorbiert, die von dem Plasmabrenner erzeugt wird, durch Drehung des internen Drehteils (120) in dem Reaktor (111), so dass die Außenwand des Reaktors (111) nicht beeinflusst wird, und mit der Maßgabe, dass die Richtung des Drehteils (120) in der gleichen Richtung wie die Richtung der Plasmaflamme beibehalten wird, die Menge einer Schwermetallkomponente wie Chrom, die von dem Inneren des aus rostfreiem Stahl hergestellten Reaktors (111) getrennt ist, minimiert werden kann.

2. Chargen-Typ-Komplextemperaturbehandlungsmaschine, die ein Hochtemperaturplasma (100) verwendet, gemäß Anspruch 1, die ferner folgende Merkmale aufweist:
eine erste Wärmeaustauscheinheit (140), die vorgesehen ist, um einen Wärmeaustausch zwischen Außenluft und Abgas, das von dem Reaktionsteil (110) abgegeben wird, durchzuführen und Feuchtigkeit des Abgases zu kondensieren;
eine Wäschereinheit (150), die vorgesehen ist, um mit der ersten Wärmeaustauscheinheit (140) verbunden zu werden und feine Partikel des Abgases, das einem Wärmeaustausch unterzogen wird, zu sammeln;
eine Mischeinheit (160), die vorgesehen ist, um mit der Wäschereinheit (150) verbunden zu werden und Sauerstoff mit dem Abgas, das einer Sammlung der feinen Partikel unterzogen wird, zu mischen;
eine Heizeinheit (170), die vorgesehen ist, um eine Temperatur des mit Sauerstoff gemischten Abgases zu steuern;
eine Reinigungseinheit (180), die vorgesehen ist, um eine katalytische Reaktion des Abgases für Verschmutzungssubstanz zu bewirken, wobei das Abgas eine Temperatur aufweist, die durch die Heizeinheit (170) gesteuert wird;
eine zweite Wärmeaustauscheinheit (190), die vorgesehen ist, um mit der Reinigungseinheit (180) verbunden zu werden und Feuchtigkeit des Abgases durch einen Wärmeaustausch zwischen dem Abgas und der Außenluft zu kondensieren; und
eine Abgaseinheit (200), die stromabwärts der zweiten Wärmeaustauscheinheit (190) vorgesehen ist, um das Abgas abzugeben.

3. Chargen-Typ-Komplextemperaturbehandlungsmaschine, die ein Hochtemperaturplasma (100) verwendet, gemäß Anspruch 2,
wobei die Reinigungseinheit (180) vorgesehen ist, um eine Bindung zwischen CO in dem Abgas und O₂ herzustellen, das zusätzlich durch einen Oxidationskatalysator zugeführt wird, um CO₂ zu bilden, und um NO_{X} durch einen Reduktionskatalysator mit einem Reduktionsmittel in N₂ und H₂O umzuwandeln.

4. Chargen-Typ-Komplextemperaturbehandlungsmaschine, die ein Hochtemperaturplasma (100) verwendet, gemäß Anspruch 3,
wobei die Reinigungseinheit (180) vorgesehen ist, um einen vollständigen Karbonisierungszustand mit einem Feuchtigkeitsgehalt von weniger als 1% in dem Reaktor (111) zu bestimmen, wenn eine stromabwärtige Temperatur eines Oxidationskatalysators für eine CO-Behandlung gleich oder höher als eine voreingestellte Temperatur ist, und um den Betrieb des Brennerteils (130) zu stoppen.

5. Verfahren zum Behandeln von Abgas der Chargen-Typ-Komplextemperaturbehandlungsmaschine, die ein Hochtemperaturplasma (100) verwendet, gemäß Anspruch 2, wobei das Verfahren folgende Schritte aufweist:
a) einen Schritt eines Abgebens von Abgas von dem Reaktionsteil (110);
b) einen Schritt eines Durchführens eines Wärmeaustauschs zwischen Außenluft und dem abgegebenen Abgas und Kondensieren von Feuchtigkeit durch die erste Wärmeaustauscheinheit (140);
c) einen Schritt eines Sammelns feiner Partikel des Abgases, das einer Kondensation von Feuchtigkeit unterzogen wird, durch die Wäschereinheit (150);
d) einen Schritt eines Mischens von Außenluft mit dem Abgas, das einer Sammlung der feinen Partikel unterzogen wird, durch die Mischeinheit (160);
e) einen Schritt eines Steuerns einer Temperatur des mit Sauerstoff gemischten Abgases durch die Heizeinheit (170);
f) einen Schritt eines Bewirkens einer katalytischen Reaktion des temperaturgesteuerten Abgases für Verschmutzungssubstanz durch die Reinigungseinheit (180);
g) einen Schritt eines Kondensierens von Feuchtigkeit durch einen Wärmeaustausch zwischen der Außenluft und dem Abgas, das der katalytischen Reaktion unterzogen wird, durch die zweite Wärmeaustauscheinheit (190); und
h) einen Schritt eines Abgebens des Abgases, das einer Kondensation von Feuchtigkeit unterzogen wird, durch die Abgabeeinheit.

6. Verfahren zum Behandeln von Abgas der Chargen-Typ-Komplextemperaturbehandlungsmaschine, die ein Hochtemperaturplasma (100) verwendet, gemäß Anspruch 5,
wobei bei Schritt f)
die Reinigungseinheit (180) vorgesehen ist, um einen vollständigen Karbonisierungszustand mit einem Feuchtigkeitsgehalt von weniger als 1% in dem Reaktor (111) zu bestimmen, wenn eine stromabwärtige Temperatur eines Oxidationskatalysators für eine CO-Behandlung gleich oder höher als eine voreingestellte Temperatur ist, und um den Betrieb des Brennerteils (130) zu stoppen.

## Revendications

1. Machine de traitement de température complexe de type par lot utilisant un plasma à haute température (100), comprenant :
une partie de réaction (110) prévue pour accueillir une matière organique à des fins de carbonisation possédant un réacteur circulaire ou en forme de U (111) pour permettre à la matière organique de s'accumuler depuis une partie fond et une ouverture de réaction (112) disposée sur un côté d'une partie supérieure du réacteur pour former un passage à travers lequel la matière organique peut être introduite dans le réacteur (111) ;
une partie de rotation (120) prévue pour agiter l'intérieur de la partie de réaction (110), dans laquelle la partie de rotation (120) inclut un arbre rotatif (121), qui est formé au niveau d'un centre de la partie de réaction (110), et une pluralité de rotors (122) accouplés à l'arbre rotatif (121), dans laquelle l'arbre rotatif est prévu pour tourner dans la même direction qu'une direction dans laquelle la matière organique est introduite par l'ouverture de réaction (112) ; et
une partie torche (130) prévue pour générer la flamme de plasma de manière à carboniser la matière organique à l'intérieur de la partie de réaction (110),
dans laquelle la partie torche (130) est accouplée à la partie de réaction (110), et est prévue pour être accouplée à un côté opposé à la position où la matière organique est accumulée et agitée à l'intérieur de la partie de réaction (110), et
dans laquelle le réacteur (111) est fabriqué en acier inoxydable,
et dans laquelle des régions du réacteur (111) sont définies en tant que premier quadrant, deuxième quadrant, troisième quadrant et quatrième quadrant dans le sens contraire des aiguilles d'une montre depuis le côté supérieur droit du réacteur (111) sur la base des axes horizontal et vertical par rapport au centre du réacteur (111), l'ouverture de réaction (112) et la partie torche (130) sont situées dans la région de premier quadrant, de sorte que, étant donné que la partie torche est positionnée au niveau d'une partie supérieure droite et décharge le plasma, diverses régions de température peuvent être formées dans le réacteur et permettent la réalisation d'une carbonisation en fonction de températures complexes d'une haute température, d'une température moyenne et d'une basse température,
dans laquelle la partie torche (130) est accouplée dans une direction perpendiculaire à une direction tangentielle de la paroi interne du réacteur (111),
dans laquelle la partie torche (130) est prévue pour présenter une direction d'émission à un angle de 0° ou plus vers l'intérieur depuis une direction tangentielle de la paroi externe du réacteur (111), dans laquelle la partie torche (130) présente une structure dans laquelle la matière organique absorbe de la chaleur à température ultra-haute produite à partir de la torche à plasma par rotation de la partie de rotation interne (120) dans le réacteur (111) de sorte que la paroi externe du réacteur (111) ne soit pas touchée et à condition que la direction de la partie de rotation (120) soit maintenue dans la même direction que la direction de la flamme de plasma, la quantité d'un composant de métal lourd tel que le chrome qui est séparé de l'intérieur du réacteur (111) composé d'acier inoxydable peut être réduite au minimum.

2. Machine de traitement de température complexe de type par lot utilisant un plasma à haute température (100) selon la revendication 1, comprenant en outre :
une première unité d'échange de chaleur (140) prévue pour effectuer un échange de chaleur entre l'air externe et les gaz d'échappement évacués de la partie de réaction (110) et condenser l'humidité des gaz d'échappement ;
une unité d'épuration (150) prévue pour être reliée à la première unité d'échange de chaleur (140) et collecter de fines particules des gaz d'échappement soumis à un échange de chaleur ;
une unité de mélange (160) prévue pour être reliée à l'unité d'épuration (150) et mélanger l'oxygène avec les gaz d'échappement soumis à la collecte des fines particules ;
une unité de chauffage (170) prévue pour réguler une température des gaz d'échappement mélangés à l'oxygène ;
une unité de purification (180) prévue pour provoquer une réaction catalytique des gaz d'échappement pour les matières polluantes, les gaz d'échappement présentant une température régulée par l'unité de chauffage (170) ;
une deuxième unité d'échange de chaleur (190) prévue pour être reliée à l'unité de purification (180) et condenser l'humidité des gaz d'échappement par le biais d'un échange de chaleur entre les gaz d'échappement et l'air externe ; et
une unité d'échappement (200) prévue en aval de la deuxième unité d'échange de chaleur (190) pour évacuer les gaz d'échappement.

3. Machine de traitement de température complexe de type par lot utilisant un plasma à haute température (100) selon la revendication 2,
dans laquelle l'unité de purification (180) est prévue pour créer une liaison entre le CO des gaz d'échappement et l'O₂, qui est apporté en plus par un catalyseur d'oxydation, de manière à former du CO₂, et pour changer le NOx en N₂ et H₂O par un catalyseur de réduction avec un agent de réduction.

4. Machine de traitement de température complexe de type par lot utilisant un plasma à haute température (100) selon la revendication 3,
dans laquelle l'unité de purification (180) est prévue pour déterminer un état complet de carbonisation qui consiste à présenter une teneur en humidité de moins de 1 % dans le réacteur (111) lorsqu'une température en aval d'un catalyseur d'oxydation pour un traitement de CO est supérieure ou égale à une température prédéfinie, et pour arrêter le fonctionnement de la partie torche (130).

5. Procédé de traitement de gaz d'échappement de la machine de traitement de température complexe de type par lot utilisant un plasma à haute température (100) selon la revendication 2, le procédé comprenant :
a) une étape consistant à évacuer les gaz d'échappement de la partie de réaction (110) ;
b) une étape consistant à effectuer un échange de chaleur entre l'air externe et les gaz d'échappement évacués et à condenser l'humidité par la première unité d'échange de chaleur (140) ;
c) une étape consistant à collecter les fines particules des gaz d'échappement soumis à la condensation d'humidité par l'unité d'épuration (150) ;
d) une étape consistant à mélanger l'air externe avec les gaz d'échappement soumis à la collecte des fines particules par l'unité de mélange (160) ;
e) une étape consistant à réguler une température des gaz d'échappement mélangés à l'oxygène par l'unité de chauffage (170) ;
f) une étape consistant à provoquer une réaction catalytique des gaz d'échappement régulés en température pour les matières polluantes par l'unité de purification (180) ;
g) une étape consistant à condenser l'humidité par le biais d'un échange de chaleur entre l'air externe et les gaz d'échappement soumis à la réaction catalytique par la deuxième unité d'échange de chaleur (190) ; et
h) une étape consistant à évacuer les gaz d'échappement soumis à la condensation d'humidité par l'unité d'évacuation.

6. Procédé de traitement de gaz d'échappement de la machine de traitement de température complexe de type par lot utilisant un plasma à haute température (100) selon la revendication 5,
dans lequel, à l'étape de f),
l'unité de purification (180) est prévue pour déterminer un état complet de carbonisation qui consiste à présenter une teneur en humidité de moins de 1 % dans le réacteur (111) lorsqu'une température en aval d'un catalyseur d'oxydation pour un traitement de CO est supérieure ou égale à une température prédéfinie, et pour arrêter le fonctionnement de la partie torche (130).
